# EUROPÄISCHE PATENTANMELDUNG

(11) **EP 1 801 545 A1**
(43) Veröffentlichungstag der Anmeldung: **27.06.2007**
(21) Anmeldenummer: 05028454.6
(22) Anmeldetag: 24.12.2005
(51) Int. Cl.: G01D 5/20, G01P 3/488, G01P 3/49

(54) **Geberrad für eine Wirbelstromsensoranordnung**

(71) Anmelder: ZF FRIEDRICHSHAFEN AG, 88046 Friedrichshafen (DE)
(72) Erfinder: Fischer, Wolfgang, 97486 Königsberg (DE); Baumeister, Jens, 97490 Poppenhausen (DE); Gehring, Alexander, 97478 Knetzgau (DE); Meier, Michael, 95173 Schönwald (DE)

(57) **Zusammenfassung**

Es wird ein Geberrad für eine Wirbelstromsensoranordnung beschrieben, welches einen Träger und eine auf dessen Oberfläche angeordnete elektrisch leitfähige Konturspur umfasst, die von einem zu dem Geberrad ortsfesten Wirbelstromsensor zur Gewinnung einer Drehbewegungsinformation abgetastet wird. Die Konturspur ist im Wesentlichen flächenhaft und mit einer in Abtastrichtung variierenden Breite ausgebildet. Zur Verbesserung der Haftbarkeit der Konturspur auf der Oberfläche des Trägers wird vorgeschlagen, die Konturspur als Beschichtung auf dem Träger auszuführen.

## Beschreibung

Die Erfindung betrifft ein Geberrad für eine Wirbelstromsensoranordnung gemäß dem Oberbegriff des Patentanspruchs 1.

Wirbelstromsensoren sind aus der physikalischen Messtechnik generell bekannt. Diese umfassen als wesentliche Funktionselemente eine Primär- und eine Sekundärspule, ein Geberrad sowie eine Auswerteeinrichtung. Die Primärspule wird zu hochfrequenten Schwingungen angeregt und induziert dabei in der Sekundärspule eine Spannung, wobei bei Anwesenheit eines elektrisch leitfähigen Geberrades Wirbelstromverluste erzeugt werden, welche eine Phasenverschiebung zwischen der Treiberspannung und der induzierten Spannung bewirken. Diese Phasenverschiebung wird in der Auswerteeinrichtung zu einer Information über die gegenseitige Position und/oder die Geschwindigkeit von Geberrad und Sensor verarbeitet.

Die DE 100 12 202 C2 offenbart ein Geberrad für eine Wirbelstromsensoranordnung auf dessen Umfangsoberfläche eine Metallfolie mit einer höheren elektrischen Leitfähigkeit als die Unterlage aufgeklebt ist. Die Metallfolie weist in Umfangsrichtung eine periodische, insbesondere eine ein- oder zweiseitige sinusförmige Kontur auf, welche von einer Messeinrichtung zur Gewinnung einer Drehbewegungsinformation abgetastet werden kann.

Wenn die Wirbelstromsensoranordnung bspw. als Rotorlagegeber für die Steuerung einer in einem Antriebsstrang eines Kraftfahrzeuges angeordneten elektrischen Maschine Verwendung finden soll, so muss deren Funktionssicherheit insbesondere auch bei den dabei auftretenden Betriebstemperaturen von -40°C bis ca. 180°C und unter dem Einfluss von hochfrequenten elektromagnetische Störfeldern sowie aggressiven Salzen, Feuchtigkeit und Schmutz, gewährleistet sein.

Ein Geberrad gemäß der DE 100 12 202 C2 ist insbesondere für einen Einsatz unter kraftfahrzeugspezifischen Bedingungen nicht geeignet, denn es besteht die Gefahr, dass sich die Metallfolie von deren Unterlage ablöst und eine elektrische Maschine und ggf. einen Verbrennungsmotor nicht mehr zuverlässig angesteuert werden können, was letztendlich den partiellen oder Totalausfall eines Kraftfahrzeugantriebssystems zur Folge haben kann.

Von dem genannten Stand der Technik ausgehend, ist es Aufgabe der Erfindung, ein Geberrad für eine Wirbelstromsensoranordnung mit einer Konturspur bereitzustellen, welches an dessen Einbauort, insbesondere in einem Kraffahrzeugantriebsstrang, gegenüber äußeren Einflüssen unempfindlich und einfach und kostengünstig herstellbar ist.

Die vorstehend genannte Aufgabe wird gelöst durch ein gattungsgemäßes Geberrad mit dem kennzeichnenden Merkmal des Patentanspruchs 1. Vorteilhafte Weiterbildungen und Ausgestaltungen der Erfindung sind in den Unteransprüchen angegeben.

Das erfindungsgemäße Geberrad für eine Wirbelstromsensoranordnung umfasst zunächst einen Träger und eine auf dessen Oberfläche angeordnete, elektrisch leitfähige Konturspur, die von einem zu dem Geberrad ortsfesten Wirbelstromsensor zur Gewinnung einer Drehbewegungsinformation abgetastet wird, wobei die Konturspur im Wesentlichen flächenhaft und mit einer in Abtastrichtung variierenden Breite ausgebildet ist. Das Geberrad zeichnet sich insbesondere dadurch aus, dass die Konturspur als Beschichtung auf dem Träger ausgeführt ist. Das bedeutet, dass die Konturspur durch ein Beschichtüngsverfahren erst unmittelbar auf der Trägeroberfläche gebildet wird und dort eine festhaftende Adhäsionsschicht bildet. Bei der vorgeschlagenen Lösung erübrigt sich somit ein Klebemittel. Es ergibt sich der Vorteil, dass die Haftung der Konturspur gegenüber thermischen Einflüssen und der Wirkung von aggressiven Medien, welche ein Klebemittel und die Haftbarkeit der Konturspur negativ beeinflussen können, deutlich verbessert wird.

Die Konturspur ist vorzugsweise als Kupferfilm ausgebildet und kann bezüglich ihrer Geometrie auf vielfältige Weise auf dem Träger ausgeführt sein. Vorteilhafterweise findet dabei ein periodisches Muster Verwendung, welche auf einem rotationszylindrischen Träger in Umfangsrichtung einmalig ausgebildet ist oder sich über den Umfang mehrfach wiederholen kann. Die Konturspur kann dabei ununterbrochen, d.h. in sich geschlossen oder auch segmentiert ausgeführt sein. Besonders bevorzugt weist das Muster eine stetig verlaufende Kontur, beispielsweise eine Sinusform, auf. Dieses erlaubt eine Information über die Rotationsgeschwindigkeit, die Rotationsrichtung und insbesondere auch eine hochaufgelöste Lageinformation innerhalb einer Periode des Musters.

Eine den Anforderungen genügende Beschichtung weist eine Dicke im Bereich von 50 bis 500 µm auf. Es hat sich als besonders vorteilhaft herausgestellt, die Beschichtung mit einer Dicke im Bereich von 50 bis etwa 150 µm auszuführen. Eine solche Schicht genügt einerseits bereits den messtechnischen Anforderungen des Sensorsystems zur Gewinnung eines auswertbaren Signals und weist auch die beim Handling des Trägers erforderliche Abreibfestigkeit auf. Andererseits ist es jedoch günstig, die als obere Grenze angegebene Schichtdicke nicht wesentlich zu überschreiten, da bereits ab dieser Dicke in Abhängigkeit vom Herstellungsverfahren der Beschichtung eine erhöhte Oberflächenrauhigkeit der aufgebrachten Schicht auftreten kann, welche das Signal/Rausch-Verhältnis des Sensorsystems ungünstig beeinflussen kann.

Die Modellierung der Breite der Konturspur kann nach mehreren Methoden erfolgen. Eine besonders vorteilhafte Variante sieht vor, den Träger mittels einer Maske abzudecken. Die Maske weist zu der Konturspur entsprechende Ausnehmungen auf, die während der Beschichtung mit dem Beschichtungsmaterial aufgefüllt werden. Das über die Kontur hinaus abgeschiedene Beschichtungsmaterial wird auf der Maske angereichert. Nach Abnahme der Maske verbleibt somit auf dem Träger eine Konturspur mit einer vorher definierten Geometrie. Auf diese Weise kann eine Konturspur mit einem besonders scharfen Randbereich ausgebildet werden.

Ein weitere Variante der Konturgebung der Konturspur sieht vor, zunächst einen größeren, als für die Konturspur erforderlichen Oberflächenbereich auf dem Träger zu beschichten, beispielsweise einen am Umfang umlaufenden Streifen konstanter Dicke. Das über die gewünschte Konturspur überstehende Schichtmaterial wird in einem Folgeschritt entfernt. Dieses kann bspw. mechanisch, z.B. durch Fräsen oder chemisch durch eine Ätztechnik in Verbindung mit einer vorherigen Maskierung erfolgen.

Eine noch weitere Möglichkeit zur Konturgebung der Konturspur sieht vor, auf der Oberfläche des Trägers z.B. durch Fräsen zunächst eine Negativform der Konturspur zu erzeugen und diese Form bei einem Beschichtungsvorgang mit dem Beschichtungsmaterial aufzufüllen, wobei auch die an die Konturspur angrenzenden Randbereiche bedeckt werden. Das überschüssige Beschichtungsmaterial kann anschließend von den Randbereichen z.B. mechanisch durch Drehen oder durch chemische Lösungsvorgänge entfernt werden.

Gemäß einer vorteilhaften Weiterbildung des Geberrades wird vorgeschlagen, eine Konturspur als Kaltgasspritzschicht zu erzeugen. Beim Kaltgasspritzen handelt es sich um ein nicht-thermisches Verfahren, wobei ein pulverförmiger Spritzwerkstoff in einem Inertgas, z.B. Stickstoff, in einer Laval-Düse auf Überschallgeschwindigkeit beschleunigt und auf ein Substrat geschleudert wird, wo es sich zu einer Schicht anreichert. Im Ergebnis entstehen bei Anwendung des Verfahrens besonders reine, dichte und sehr gut haftende metallische Schichten auf unterschiedlichsten Trägermaterialien, insbesondere auch auf den im Maschinenbau gängigen Stahlwerkstoffen.

Es hat sich als besonders vorteilhaft erwiesen, die Konturspur in einer am Träger ausgebildeten Ausnehmung gegenüber angrenzenden Oberflächenbereichen vertieft anzuordnen. Diese Anordnung schützt die Beschichtung vor einer mechanischen Beschädigung bei der Montage des Geberrades, insbesondere bei einer Anordnung in einem Kraftfahrzeugantriebsstrang. Eine solche vertiefte Anordnung ist auch im Hinblick auf ggf. in der Umgebung der Sensoranordnung auftretenden elektromagnetischen Störfelder von Vorteil: Wenn der Träger bspw. aus einem Eisen- oder Stahlwerkstoff ausgebildet ist, so kann der Wirbelstromsensor ebenfalls gegenüber einem erhabenen Randbereich oder der restlichen Oberfläche des Trägers etwas vertieft in der Ausnehmung angeordnet werden, so dass der unmittelbar vom Wirbelstromsensor detektierte Bereich der Konturspur gegenüber Störfeldern weitestgehend abgeschirmt ist.

Zur weiteren Erhöhung der Haftbarkeit der Beschichtung ist es zweckmäßig, den zur Beschichtung vorgesehenen Oberflächenbereich des Trägers aufzurauchen. Dieses kann z.B. durch Sandstrahlen oder durch eine chemische Vorbehandlung des Trägers erzielt werden.

Zum noch besseren Schutz der Konturspur vor äußeren Einflüssen, insbesondere gegenüber Korrosionserscheinungen wird vorgeschlagen, auf dieser eine dielektrische Deckschicht vorzusehen, welche vorzugsweise aus einem Metalloxid oder einem temperaturbeständigen Kunststoff besteht. Als Deckschicht eignet sich z.B. Aluminiumoxid, was z.B. durch ein Plasma- oder Flammenspritzverfahren auf die metallische Konturspur aufgetragen werden kann. Für das Aufbringen eines Kunststofflackes eignet sich in besonderer Weise ein Kathodisches Tauchlackverfahren (KTL).

In einer besonders bevorzugten Ausführungsform des Geberrades ist der Träger als Teil eines Rotors einer permanenterregten Synchronmaschine ausgebildet und trägt eine Mehrzahl von Magnetpolen, von denen jeweils zwei ein magnetisches Polpaar - bilden. Dabei ist die Konturspur als periodisches sinusförmiges Muster ausgeführt, welches eine zu den magnetischen Polpaaren identische Anzahl von Perioden umfasst.

Bei einer noch weiteren, darauf basierenden, Ausführungsform ist die Konturspur so zu den Magnetpolen orientiert, dass die Extremwerte in der Breite der Konturspur mit den Extremwerten der magnetischen Feldstärke der Magnetpole zumindest näherungsweise zusammenfallen.

Die Erfindung wird nachfolgend mit Bezug auf die anliegende Zeichnung näher erläutert. Diese zeigt ein Geberrad 10 als Element einer permanenterregten elektrischen Synchronmaschine 12 in Außenläuferbauweise, welche zur Anordnung in einem Antriebsstrang eines Kraftfahrzeuges vorgesehen und dafür bestimmt ist, gemeinsam mit einer Verbrennungskraftmaschine oder allein auf die Antriebsräder des Kraftfahrzeuges antreibend oder bremsend einzuwirken.

Die elektrische Maschine 12 umfasst als Hauptelemente einen Stator 26 und einen diesen umgebenden und zu diesem um eine Achse D drehbar gelagerten Rotor 14, wobei das Geberrad 10 dessen Rotorträger bildet. Das Geberrad 10 ist als flacher, topfförmiger Rotationszylinder mit einem Hohlzylinderabschnitt 13 und einem einstückig daran angeformten und sich radial erstreckenden Wandbereich 11 als Drückwalzteil aus einer etwa 5-10mm starken Stahlronde gefertigt und mittels Bohrungen 15 zur Verbindung mit einer zeichnerisch nicht dargestellten Rotorwelle vorgesehen.

Zur Bildung des Rotors 14 ist in den Innenraum des Geberrades 10 ein laminiertes Blechpaket 22 eingepresst. An dessen Innenumfangsfläche ist eine Mehrzahl von alternierend antiparallel, radial magnetisierten Magnetpolen bzw. Permanentmagneten 24 angeordnet, von denen jeweils zwei am Umfang benachbarte Permanentmagnete ein magnetisches Polpaar bilden.

Das Geberrad 10 ist zugleich Bestandteil einer Wirbelstromsensoranordnung 16, welche weiterhin einen nur schematisch angedeuteten Wirbelstromsensor 18 umfasst, der radial beabstandet und ortsfest zu dem Geberrad 10 angeordnet ist und eine auf diesem angeordnete Konturspur 20 mit einer in Umfangsrichtung variierenden Breite abtastet. Beim Betreiben der elektrischen Maschine 12 tritt das Magnetfeld der Permanentmagnete 24 in Wechselwirkung mit einem von einer Steuerung modulierten elektromagnetischen Drehfeld des Stators 26. Das Statorfeld wird dabei in Abhängigkeit von der Drehlage des Rotors 14 zu dem feststehenden Stator 26 periodisch eingeprägt, wobei die Wirbelstromsensoranordnung 12 mit einer Auswerteschaltung 28 und einer nicht dargestellten Maschinensteuerung kommuniziert und der Gewinnung einer exakten Drehlageinformation dient.

Die Konturspur 20 ist im vorliegenden Fall als periodisches sinusförmiges Muster 30 ausgeführt, wobei eine axiale Begrenzungsseite 32 sinusförmig moduliert ist und die andere Begrenzungsseite 34 geradlinig begrenzt ist. Das Muster 30 ist so angelegt, dass es eine zu der Anzahl der magnetischen Polpaare identische Anzahl von Perioden umfasst. Des Weiteren ist die Konturspur 20 so zu den Magnetpolen 24 orientiert, dass die Extremwerte in der Breite der Konturspur 30 mit den Extremwerten der magnetischen Feldstärke der Magnetpole 24 zumindest näherungsweise zusammenfallen.

Die dargestellte Konturspur 20 ist als dünner Kupferfilm mit einer Stärke von etwa 150µm ausgebildet und wurde mittels Kaltgasspritzen als Beschichtung direkt auf dem Rotorträger 10 erzeugt. Es ist insbesondere ersichtlich, dass die Konturspur 20 in einer am Träger 10 ausgebildeten Ausnehmung 36 gegenüber angrenzenden Oberflächenbereichen bzw. als Radialvorsprünge 38 ausgebildete erhabenen Bereichen vertieft angeordnet ist. Zur Erzielung eines möglichst hoch aufgelösten und gut auswertbaren Messsignals, insbesondere eines günstigen Signal-Rauschverhältnisses, weist die Beschichtung über den Umfang des Geberrades 10 eine möglichst homogene Schichtdicke auf. Die über eine definierte Wegstrecke bzw. ein definiertes Bogenmaß durch eine in Abtastrichtung inhomogene Schichtdicke hervorgerufene Messsignaländerung ist dabei geringer als die über diese Strecke durch eine Breitenmodulation der Konturspur 20 hervorgerufene Messsignaländerung.

Zur Verbesserung der Haftung wurde der zur Beschichtung vorgesehene Oberflächenbereich des Rotorträgers 10 zunächst mittels Sandstrahlen aufgerauht. Zur Abbildung der periodischen Konturspur 20 wurde der Rotorträger 10 nachfolgend mittels einer zeichnerisch nicht dargestellten Maske abgedeckt, welche eine zu der Konturspur 20 entsprechende Ausnehmung aufweist, die während der Beschichtung des Rotorträgers 10 allmählich mit Kupfer gefüllt wurde. Nach Abnahme der Maske verbleibt somit auf dem Träger 10 die Konturspur 20 mit der vorbestimmten Geometrie. Zum Korrosionsschutz wurde die Kupferbeschichtung abschließend mit einer dielektrischen Deckschicht 40 aus einem temperaturbeständigen Kunststoff abgedeckt.

Der Wirbelstromsensor 18 ist im montierten Zustand so zum Geberrad 10 angeordnet, dass die zur Konturspur 20 benachbarten erhabenen Vorsprünge 38 radial mit diesem überlappen und für die Wirbelstromsensoranordnung 16 dadurch ein Schutz vor dem Einfluss von elektromagnetischen Störfeldern gegeben ist. Der Wirbelstromsensor 18 umfasst zwei, in Ersteckungsrichtung der Konturspur 20, also in Umfangsrichtung des Rotorträgers 10, um eine viertel Periode von 2n, also um Π /2, versetzt angeordnete Sensoreinheiten, wodurch in bekannter Weise ein Sinus- und ein Cosinus-Signal generierbar sind und die Stellung des Rotors 14 zum Stator 26 eindeutig innerhalb einer Periode des Musters 30 eindeutig bestimmt werden kann.

### Bezugszeichenliste

- 10: Geberrad
- 11: Boden
- 12: elektrische Maschine
- 13: Hohlzylinderabschnitt
- 14: Rotor
- 15: Bohrung
- 16: Wirbelstromsensoranordnung
- 18: Wirbelstromsensor
- 20: Konturspur
- 22: Blechpaket
- 24: Permanentmagnet
- 26: Stator
- 28: Auswerteschaltung
- 30: periodisches Muster
- 32, 34: axiale Begrenzungsseite
- 36: Ausnehmung
- 38: Radialvorsprung
- 40: Deckschicht

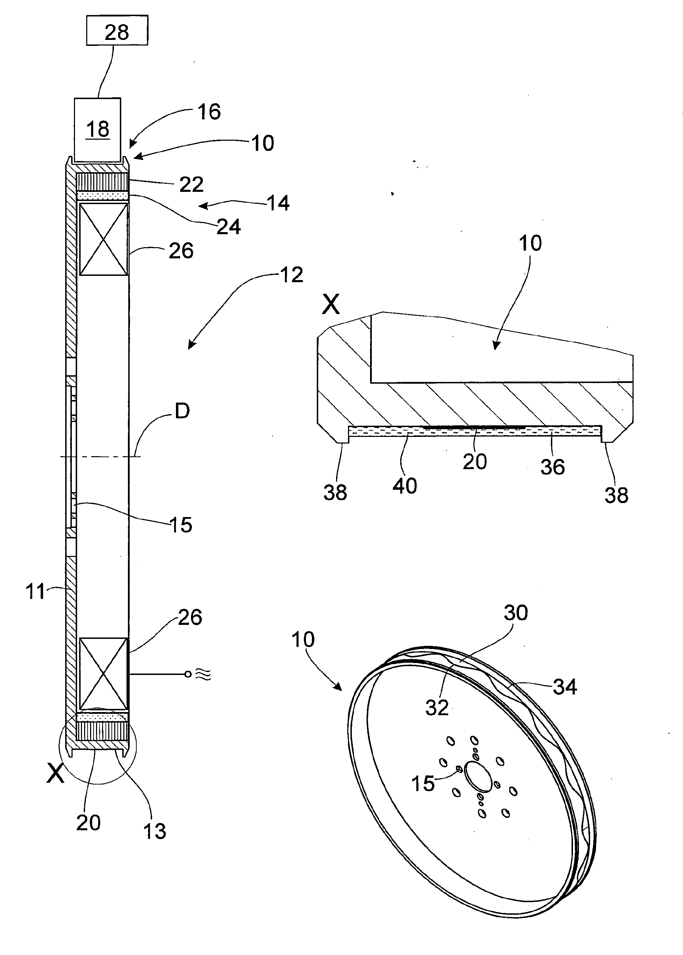

## Patentansprüche

1. Geberrad (10) für eine Wirbelstromsensoranordnung (16) umfassend einen Träger (11,13) und eine auf dessen Oberfläche angeordnete elektrisch leitfähige Konturspur (20), die von einem zu dem Geberrad (10) ortsfesten Wirbelstromsensor (18) zur Gewinnung einer Drehbewegungsinformation abgetastet wird, wobei die Konturspur (20) im Wesentlichen flächenhaft und mit einer in Abtastrichtung variierenden Breite ausgebildet ist,
**dadurch gekennzeichnet,**
**dass** die Konturspur (20) als Beschichtung auf dem Träger ausgeführt ist.

2. Geberrad nach Anspruch 1,
**dadurch gekennzeichnet,**
**dass** die Beschichtung eine Dicke im Bereich von 50 bis 500 µm aufweist.

3. Geberrad nach Anspruch 1,
**dadurch gekennzeichnet,**
**dass** die Beschichtung eine Dicke im Bereich von 50 bis etwa 150 µm aufweist.

4. Geberrad nach einem der Ansprüche 1-3 ,
**dadurch gekennzeichnet,**
**dass** die Konturgebung der Konturspur (20) mittels einer Maske während der Beschichtung erfolgt.

5. Geberrad nach einem der Ansprüche 1-3 ,
**dadurch gekennzeichnet,**
**dass** die Konturgebung der Konturspur (20) nach der Erzeugung der Beschichtung durch partielles Entfernen der Beschichtung erfolgt.

6. Geberrad nach einem der Ansprüche 1-3 ,
**dadurch gekennzeichnet,**
**dass** zur Konturgebung der Konturspur (20) auf der Oberfläche des Trägers eine Negativform der Konturspur (20) erzeugt wird, welche durch die Beschichtung zumindest teilweise ausgefüllt wird und wobei die über die Konturspur (20) lateral überstehende Beschichtung entfernt wird.

7. Geberrad nach einem der Ansprüche 1-6,
**dadurch gekennzeichnet,**
**dass** die Konturspur (20) als Kaltgasspritzschicht ausgeführt ist.

8. Geberrad nach einem der Ansprüche 1-7,
**dadurch gekennzeichnet,**
**dass** die Konturspur (20) in einer am Träger (11, 13) ausgebildeten Ausnehmung (36) gegenüber angrenzenden Oberflächenbereichen (38) vertieft angeordnet ist.

9. Geberrad nach einem der Ansprüche 1-8,
**dadurch gekennzeichnet,**
**dass** ein zur Beschichtung vorgesehener Oberflächenbereich des Trägers eine aufgerauhte Oberfläche aufweist.

10. Geberrad nach einem der Ansprüche 1-9,
**dadurch gekennzeichnet,**
**dass** die Konturspur (20) eine dielektrische Deckschicht (40) aufweist.

11. Geberrad nach Anspruch 10,
**dadurch gekennzeichnet,**
**dass** die Deckschicht (40) aus einer Metalloxid- oder einer temperaturbeständigen Kunststoffschicht besteht.

12. Geberrad nach einem der Ansprüche 1-11,
**dadurch gekennzeichnet,**
**dass** der Träger (11, 13) als Teil eines Rotors (14) einer permanenterregten Synchronmaschine (12) ausgebildet ist und eine Mehrzahl von Magnetpolen (24) trägt, von denen jeweils zwei ein magnetisches Polpaar bilden und dass die Konturspur (20) als periodisches sinusförmiges Muster (30) ausgeführt ist, welches eine zu den Polpaaren identische Anzahl von Perioden umfasst.

13. Geberrad nach Anspruch 12,
**dadurch gekennzeichnet,**
**dass** die Konturspur (20) so zu den Magnetpolen (24) orientiert ist, dass die Extremwerte in der Breite der Konturspur (20) mit den Extremwerten der magnetischen Feldstärke der Magnetpole (24) zumindest näherungsweise zusammenfallen.
